# EUROPÄISCHE PATENTSCHRIFT

(11) **EP 0 453 607 B1**
(45) Veröffentlichungstag und Bekanntmachung des Hinweises auf die Patenterteilung: **07.09.1994**
(21) Anmeldenummer: 90108055.6
(22) Anmeldetag: 27.04.1990
(51) Int. Cl.: H04L 12/56

(54) **Verfahren und Schaltungsanordnung zur Reduzierung des Verlustes von Nachrichtenpaketen, die über eine Paketvermittlungseinrichtung übertragen werden**
Method and circuit arrangement for reducing the loss of information packets transmitted through a packet switch
Méthode et dispositif pour réduire la perte de paquets d'information, transmis par un commutateur de paquets

(43) Veröffentlichungstag der Anmeldung: 30.10.1991
(73) Patentinhaber: SIEMENS AKTIENGESELLSCHAFT, 80333 München (DE)
(72) Erfinder: Foglar, Andreas, Dipl.-Phys., D-8000 München 60 (DE); Rau, Peter, Dr. Dipl.-Phys., D-8000 München 60 (DE)

(56) Entgegenhaltungen:
- EP-A- 0 108 555
- EP-A- 0 321 050
- IEEE INFOCOM 88, März 1988, IEEE, New York, US, Seiten 19-28; P.NEWMAN: "A Broad-Band Packet Switch for Multi-Service Communications"
- TELCOM REPORT, vol. 13, no. 1, 1990, MUNCHEN, DE, Seiten 4-7; H.SCHNEIDER: "Mit ATM zur bitvariablen Kommunikation"

## Beschreibung

Die Erfindung betrifft ein Verfahren und eine Schaltungsanordnung zum Weiterleiten von auf Zubringerleitungen im Zuge von virtuellen Verbindungen nach einem asynchronen Übertragungsverfahren übertragenen, einen die jeweilige virtuelle Verbindung bezeichnenden Paketkopf aufweisenden Nachrichtenpaketen über eine wenigstens zwei redundante Koppelvielfache aufweisende Paketvermittlungseinrichtung zu mit dieser verbundenen Abnehmerleitungen hin, wobei für jedes der auf einer der Zubringerleitungen im Zuge einer virtuellen Verbindung übertragenen Nachrichtenpakete durch Vermehrfachen eine Nachrichtenpaket-Gruppe mit einer der Anzahl der redundanten Koppelvielfache entsprechenden Anzahl von identischen Nachrichtenpaketen gebildet wird, und wobei jedem der Nachrichtenpakete einer Nachrichtenpaket-Gruppe eine identische, für aufeinanderfolgende Nachrichtenpaket-Gruppen sich ändernde Zusatzkennung beigefügt wird, und die Nachrichtenpakete einer Nachrichtenpaket-Gruppe getrennt überdie redundanten Koppelvielfache in Richtung zu der für die jeweilige virtuelle Verbindung in Frage kommenden Abnehmerleitung hin übertragen werden, und wobei nach einer solchen Übertragung über die redundanten Koppelvielfache anhand der den Nachrichtenpaketen jeweils beigefügten Zusatzkennung lediglich eines der zu einer Nachrichtenpaket-Gruppe gehörenden Nachrichtenpakete an die in Frage kommende Abnehmerleitung weitergeleitet wird.

Ein solches Verfahren und eine solche Schaltungsanordnung sind bereits in der Europäischen Patentanmeldung 89103798.8 (= EP-A- 0 384 936, veröffentlicht am 05.09.90) vorgeschlagen worden.

Bei diesem Verfahren oder dieser Schaltungsanordnung kann es bei einer fehlerhaften Übertragung eines Nachrichtenpaketes zu einem Verlust eines gesamten Nachrichtenpaket-Zyklus, der beispielsweise eine Anzahl von 64 Nachrichtenpaketen umfassen kann, kommen.

Die Erfindung stellt sich nun die Aufgabe, ein Verfahren und eine Schaltungsanordnung der eingangs genannten Art anzugeben, das den möglichen Verlust von Nachrichtenpaketen reduziert.

Gelöst wird die vorstehend aufgezeigte Aufgabe bei einem Verfahren der eingangs genannten Art erfindungsgemäß dadurch, daß nach der getrennten Übertragung der Nachrichtenpakete einer Nachrichtenpaket-Gruppe über die redundanten Koppelvielfache das als erstes eintreffende, fehlerfrei übertragene Nachrichtenpaket einer Nachrichtenpaket-Gruppe, deren Nachrichtenpakete jeweils die auf die Zusatzkennung des zuletzt übertragenen Nachrichtenpaketes nächstfolgende Zusatzkennung aufweisen, an die in Frage kommende Abnehmerleitung weitergeleitet wird und/oderdaßjeweils das Koppelvielfach ermittelt wird, über das die Übertragung von Nachrichtenpaketen am langsamsten erfolgt und daß Nachrichtenpakete, die über das jeweilige langsamste Koppelvielfach jeweils als erste ihrer Nachrichtenpaket-Gruppe fehlerfrei übertragen sind, an die in Frage kommende Abnehmerleitung weitergeleitet werden. Dieses Verfahren bringt den Vorteil mit sich, daß im Fall des Ausbleibens des Nachrichtenpaketes mit der auf das zuletzt übertragene Nachrichtenpaket nächstfolgenden Zusatzkennung nicht der Verlust einer Anzahl von Nachrichtenpaketen entsprechend eines Nachrichtenpaket-Zyklus, der beispielsweise eine Anzahl von 64 Nachrichtenpaketen umfassen kann, in Kauf genommen werden muß, sondern vielmehr von jeder Nachrichtenpaket-Gruppe das als erstes fehlerfrei übertragene Nachrichtenpaket unabhängig von seiner Zusatzkennung weitergeleitet wird.

In weiterer Ausgestaltung der Erfindung wird das jeweilige langsamste Koppelvielfach für eine jeweilige virtuelle Verbindung dadurch ermittelt, daß im Zuge des Aufbaus einer virtuellen Verbindung für jedes in der Paketvermittlungseinrichtung vorgesehene Koppelvielfach ein mittlerer Zählerstand eingestellt wird und daß der zugehörige Zählerstand des Koppelvielfachs, über das das gerade an die betreffende Abnehmerleitung weitergeleitete Nachrichtenpaket übertragen wurde um einen Wert erhöht wird, der der um 1 verminderten Anzahl der in der Paketvermittlungseinrichtung vorgesehenen Anzahl von Koppelvielfachen entspricht und einhergehend damit der Zählerstand der Koppelvielfache, die das gerade weitergeleitete Nachrichtenpaket nicht übertragen haben um einen Wert 1 vermindert werden, wobei ein Koppelvielfach, dessen Zählerstand einen jeweiligen niedrigsten Zählerstand für die jeweilige virtuelle Verbindung aufweist ein jeweiliges langsamstes Koppelvielfach ist.

Diese Maßnahme bringt den Vorteil mit sich, daß für jede virtuelle Verbindung auf besonders einfache Weise ein jeweiliges langsamstes Koppelvielfach über eine Vielzahl von übertragenen Nachrichtenpaketen ermittelt werden kann, wobei zufällige Streuungen der Übertragungsgeschwindigkeit der Koppelvielfache ausgeglichen werden.

In weiterer Ausgestaltung der Erfindung kann vorgesehen sein, daß für den Fall, daß ein Zähler während eines Verbindungsablaufs einen Zählerstand erreicht, der ein Koppelvielfach charakterisiert, das eine Vielzahl von weitergeleiteten Nachrichtenpaketen nicht selbst übertragen hat, eine Störungsmeldung erfolgt. Diese Maßnahme bringt den Vorteil einer besonders aufwandarmen Fehlererkennungsmöglichkeit mit sich.

In weiterer Ausgestaltung der Erfindung kann vorgesehen sein, daß für den Fall, daß sämtliche Zähler bis auf einen den höchsten bzw. den niedrigsten Zählerstand, der jeweils ein Koppelvielfach charakterisiert, über das für einen längeren Zeitraum kein Nachrichtenpaket an die Abnehmerleitung weitergeleitet wurde, aufweisen, über das dem jeweiligen einen Zähler zugehörige Koppelvielfach jedes fehlerfrei übertragene Nachrichtenpaket, das auf das zuletzt weitergeleitete Nachrichtenpaket nachfolgt, weitergeleitet wird.

Diese Maßnahme bringt den Vorteil mit sich, daß bei Ausfall der redundanten Übertragungswege für eine virtuelle Verbindung über das als alleinig übertragungsfähig betrachtete Koppelvielfach jedes fehlerfrei übertragene Nachrichtenpaket an die betreffende Abnehmerleitung weitergeleitet wird.

Eine Schaltungsanordnung zur Durchführung des Verfahrens der eingangs genannten Art weist für jede Zubringerleitung eine Behandlungseinrichtung und für jede Abnehmerleitung eine Auswerteeinrichtung auf, wobei eine solche Schaltungsanordnung erfindungsgemäß dadurch gekennzeichnet ist, daß die jewei lige Auswerteeinrichtung jeweils das Nachrichtenpaket einer Nachrichtenpaket-Gruppe an die zugeordnete Ausgangsleitung weiterleitet, das als erstes fehlerfrei mit einer Zusatzkennung, die derZusatzkennung des zuletztübertragenen Nachrichtenpaketes aufeinanderfolgt, eintrifft, und daß die Auswerteeinrichtung jeweils das Koppelvielfach ermittelt, über das die Übertragung von Nachrichtenpaketen am langsamsten erfolgt und daß die Auswerteeinrichtung Nachrichtenpakete, die jeweils als erste ihrer Nachrichtenpaket-Gruppe über das jeweilige langsamste Koppelvielfach fehlerfrei übertragen sind, weiterleitet.

Diese Schaltungsanordnung für die Durchführung des Verfahrens gemäß der vorliegenden Erfindung bringt den Vorteil eines geringen schaltungstechnischen Aufwands fürdie Weiterleitung von Nachrichtenpakten über die redundant ausgelegte Paketvermittlungseinrichtung mit sich. Vorteilhafte Weiterbildungen dieser Schaltungsanordnung ergeben sich aus den Patentansprüchen 5 und 6.

Im folgenden wird nun die Erfindung im zum Verständnis erforderlichen Umfang anhand von Zeichnungen beispielhaft näher erläutert.
FIG 1 zeigt ein Blockschaltbild einer Paketvermittlungseinrichtung PVE, bei der die Erfindung angewandt ist und
FIG 2 zeigt einen möglichen Aufbau einer in FIG 1 lediglich schematisch dargestellten Auswerteeinrichtung AWE, bei der das erfindungsgemäße Verfahren realisiert ist.

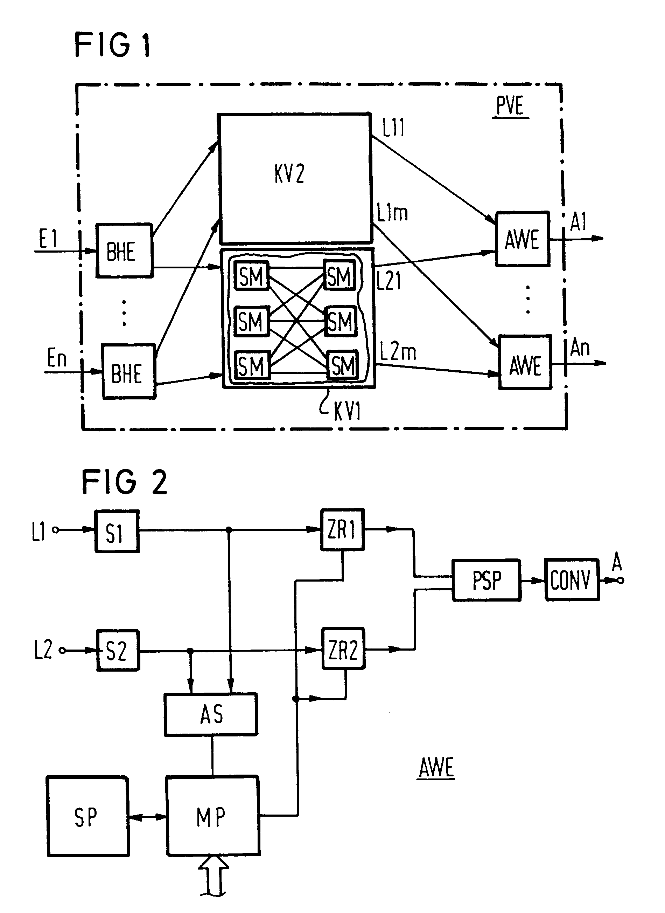

In FIG 1 ist eine Paketvermittlungsanlage PVE schematisch dargestellt, an welche eine Mehrzahl von Zubringerleitungen E1 bis En sowie eine Mehrzahl von Abnehmerleitungen A1 bis An angeschlossen sind. Von diesen sind in FIG 1 lediglich die Zubringerleitungen E1 und En und die Abnehmerleitungen A1 und An dargestellt. Auf den Zubringerleitungen und Abnehmerleitungen erfolgt jeweils eine Übertragung von Nachrichtenpaketen im Zuge von virtuellen Verbindungen nach einem asynchronen Übertragungsverfahren ("Asynchronous Transfer Mode"). Bei den Nachrichtenpaketen möge es sich um Pakete fester Länge handeln, welche jeweils über einen Paketkopf mit einer jeweiligen virtuellen Kanalnummer sowie einen Informationstei verfügen. Die jeweilige virtuelle Kanalnummer, die mit VCI bezeichnet wird, legt entsprechend der virtuellen Verbindung fest, zu welcher in Frage kommenden Abnehmerleitung Ahin das jeweilige Nachrichtenpaket übertragen wird. In dem Informationsteil erfolgt die Übertragung der eigentlichen Nachrichtensignale. Unter Nachrichtensignale sollen dabei Daten und Textsignale sowie Sprach- bzw. Bildsignale in digitaler Form verstanden werden. Weiter kann vorgesehen sein, daß den Nachrichtenpaketen jeweils eine Prüfinformation angefügt ist, die mit der voranstehenden Signalzustandsfolge das Nachrichtenpaket gebildet ist.

Wie aus FIG 1 hervorgeht, ist jeder der Zubringerleitungen E1 bis En eine Behandlungseinrichtung BHE zugeordnet. Diese Behandlungseinrichtung BHE, die beispielsweise durch eine in der EP-A 89103798.8 vorgeschlagene Behandlungseinrichtung gegeben sein kann, fügt den über die jeweilige Zubringerleitung E übertragenen, einer virtuellen Verbindung zugehörigen Nachrichtenpaketen jeweils eine für aufeinanderfolgende Nachrichtenpakete der jeweiligen virtuellen Verbindung sich ändernde Zusatzkennung bei. Die Zusatzkennung besteht aus einer Folgenummer, die für jede virtuelle Verbindung individuell im Zuge des Verbindungsaufbaus auf einen festgelegten Anfangswert gesetzt und für jedes aufeinanderfolgende Nachrichtenpaket inkrementiert wird. Eine Anzahl von beispielsweise 64 aufeinanderfolgenden Nachrichtenpaketen kann einen Nachrichtenpaket-Zyklus bilden. Die Folgenummer kann dann vorzugsweise eine Anzahl von Zuständen einnehmen, die der Anzahl entspricht, die ein Nachrichtenpaket-Zyklus Nachrichtenpakete umfaßt. Die Behandlungseinrichtung BHE bildet aus den um die Zusatzkennung ergänzten Nachrichtenpaketen zwei gleiche Nachrichtenpakete, die im folgenden als Nachrichtenpaket-Gruppe bezeichnet werden, und leitet diese zwei redundanten Koppelvielfachen KV1 und KV2 der Paktvermittlungseinrichtung PVE zu. In FIG 1 ist anhand des Koppelvielfachen KV1 schematisch angedeutet, daß die beiden Koppelvielfache KV jeweils eine Mehrzahl untereinanderverbundener Schaltermodule SM aufweisen mögen. Da der Aufbau und die Wirkungsweise derartiger Koppelvielfache KV bereits bekannt ist, wird im folgenden darauf nicht näher eingegangen.

Jedes der Koppelvielfache KV weist eine Mehrzahl von Ausgangsleitungen L11...L1m, L21...L2m auf. Dabei sind jeweils eine Ausgangsleitung L1 des Koppelfachen KV1 und eine Ausgangsleitung L2 des Koppelvielfachen KV2 gemeinsam einer gesonderten Auswerteeinrichtung AWE zugeführt. Diese Auswerteeinrichtungen AWE sind mit jeweils einer der Abnehmerleitungen A1 bis An verbunden. Eine solche Auswerteeinrichtung AWE übernimmt die über die beiden Koppelvielfache KV übertragenen Nachrichtenpakete und gibt durch ein im folgenden noch näher erläutertes Auswerten der den Nachrichtenpaketen jeweils beigefügten Zusatzkennung lediglich eines der zu einer Nachrichtenpaket-Gruppe gehörenden Nachrichtenpakete an die zugeordnete Abnehmerleitung Aab.

Bezüglich der gerade erläuterten Paketvermittlungseinrichtung PVE sei noch darauf hingewiesen, daß diese zwar gemäß FIG 1 zwei redundante Koppelvielfache aufweist. Die Anzahl der redundanten Koppelvielfache kann jedoch auch in Abhängigkeit von der Ausfallwahrscheinlichkeit jedes der Koppelvielfache KV und der geforderten Werte für die Verfügbarkeit der Paketvermittlungseinrichtung PVE entsprechend erhöht sein.

In FIG 2 ist ein möglicher Aufbau, der in FIG 1 dargestellten Auswerteeinrichtung AWE angegeben. Die über die jeweiligen Ausgangsleitungen L1, L2 übertragenen Nachrichtenpakete einer Nachrichtenpaket-Gruppe durchlaufen zunächst jeweils mit S1 und S2 bezeichnete Schnittstelleneinrichtungen. In diesen Schnittstelleneinrichtungen erfolgt jeweils die Erkennung des Beginns eines Nachrichtenpaketes und die Synchronisierung von empfangenen Nachrichtenpaketen mit dem Systemtakt, mit dem die Auswerteeinrichtung AWE angesteuert wird. Weiter erfolgt in diesen Schnittsteiieneinrichtungen jeweils eine Überprüfung der übertragenen Nachrichtenpakete hinsichtlich einer fehlerfreien Übertragung, wobei für den Fall, daß den Nachrichtenpaketen jeweils eine Prüfinformation angefügt ist, eine Überprüfung anhand dieser Prüfinformation hinzutreten kann. Liegt eine solche fehlerfreie Übertragung vor, so wird von der Schnittstelleneinrichtung S1 das gerade überprüfte Nachrichtenpaket einem Zwischenregister ZR1 zugeführt. In entsprechender Weise führt die Schnittstelleneinrichtung S2 bei einer fehlerfreien Übertragung das gerade überprüfte Nachrichtenpaket einem Zwischenregister ZR2 zu. Von jedem fehlerfrei übertragenen Nachrichtenpaket wird der Paketkopf, der jeweils eine der jeweiligen virtuellen Verbindung zugehörige Kanalnummer VCI und eine von der eingangsseitigen Behandlungseinrichtung BHE der Paketvermittlungseinrichtung PVE fortlaufend vergebene Folgenummeraufweist, zusätzlich einer Auswahlschaltung AS zugeführt. Der jeweilige Paketkopf wird von der Auswahlschaltung AS einer Steuereinrichtung MP, die beispielsweise mit einem Mikroprozessor gebildet sein kann und die, wie mit einem unterbrochenen Pfeil angedeutet, mit einer nicht weiter dargestellten, übergeordneten Steuerung der Paketvermittlungseinrichtung PVE verbunden ist, zugeführt. Die in dem jeweiligen Paketkopf enthaltene virtuelle Kanalnummer VCI wird einem Speicher SP zugeführt und dient dort der Adressierung einer Mehrzahl von Speicherzellen, in denen unter anderem die verbindungsindividuelle Folgenummer abgelegt ist, die im Zuge des Aufbaus der jeweiligen virtuellen Verbindung auf einen festgelegten Anfangswert gesetzt wird. Der Speicherinhalt der jeweiligen adressierten Speicherzellen wird in die Steuereinrichtung MP übernommen. In der Steuereinrichtung MP wird geprüft, ob die von der Auswahlschaltung AS zugeführte Folgenummer die nächstfolgende Folgenummer auf das zuletzt weitergeleitete Nachrichtenpaket ist. Bei positivem Ergebnis bewirkt die Steuereinrichtung MP anhand einer von der Auswahlschaltung AS mit dem Paketkopf mitgeführten Zusatzinformation W, die angibt, von welchem Koppelvielfach KV das jeweilige Nachrichtenpaket übertragen wurde, die Weiterleitung des jeweiligen Nachrichtenpaketes aus dem betreffenden Zwischenregister ZR in einen Pufferspeicher PSP, der die aufgenommenen Nachrichtenpakete in der Reihenfolge ihres Einschreibens an die mitder jeweiligen AuswerteeinheitAWE verbundene Abnehmedeitung Aweiterleitet und dabei eine Anpassung der innerhalb der Paketvermittlungseinrichtung PVE herrschenden Übertragungsgeschwindigkeit an die dergegenüber niedrigere Übertragungsgeschwindigkeit auf der jeweiligen Abnehmerleitung A bewirkt. Bei diesem Weiterleiten durchlaufen die einzelnen Nachrichtenpakete einen Umsetzer CONV, in dem die den Nachrichtenpaketen in der eingangsseitigen Behandlungseinrichtung BHE beigefügte Zusatzkennung entfernt wird. Die jeweilige, in der Steuereinrichtung MP befindliche Folgenummer des gerade übertragenen Nachrichtenpaketes wird in den verbindungsindividuellen Speicherzellen abgespeichert; dabei kann die jeweilige Folgenummer inkrementiert sein, wodurch sich die Feststellung des nächstfolgenden Nachrichtenpaketes auf einen Vergleich der jeweiligen Folgenummern beschränkt. Bei dieser Vorgehensweise ist ein Nachrichtenpaket, das jeweils nächstfolgende Nachrichtenpaket auf das zuletzt weitergeleitete Nachrichtenpaket, wenn ein Vergleich der von dem gerade übertragenen Nachrichtenpaket mitgeführten Folgenummer mit der Folgenummer, die zuletzt für die jeweilige virtuelle Verbindung in den Speicher SP abgelegt wurde, Übereinstimmung ergibt.

Nachrichtenpakete, die jeweils in dem ZwischenregisterZR zwischengespeichert sind und von der Steuereinrichtung MP nicht weitergeleitet werden, werden von dem jeweils als nächstes in das Zwischenregister ZR eingeschriebenen Nachrichtenpaket überschrieben. Für jedes, aus dem Zwischenregister ZR weitergeleitete Nachrichtenpaket wird in dem Speicher SP, mit der virtuellen Kanalnummer VCI als Adresse, die dem jeweils übertragenen Nachrichtenpaket entsprechende Folgenummer, die beispielsweise durch die inkrementierte, in dem Paketkopf des jeweiligen Nachrichtenpaketes mitgeführte Folgenummergegeben sein kann, abgespeichert. Zusätzlich zu der jeweiligen Folgenummer wird in dem Speicher SP verbindungsindividuell die mit W bezeichnete Information, eine Anzahl von Zählerständen Z und eine mit V bezeichnete Information abgespeichert.

Mit Hilfe der Zählerstände Z kann jeweils ein Koppelvielfach KV ermittelt werden, über das die Übertragung von Nachrichtenpaketen jeweils am langsamsten erfolgt. Im Zuge des Aufbaus einer Verbindung werden die zugehörigen Zählerstände Z, die jeweils einem Koppelvielfach KV zugeordnet sind, auf einen mittleren Zählerstand des höchstmöglichen Zählerstandes eingestellt. Beträgt beispielsweise der höchstmögliche Zählerstand 1024, so können bei Aufbau einer Verbindung die zugehörigen Zählerstände auf einen Zählerstand 512 eingestellt werden. Die Organisation ist nun so getroffen, daß für jedes weitergeleitete Nachrichtenpaket der Zählerstand des Koppelvielfaches KV, über das das betreffende Nachrichtenpaket übertragen wurde, um einen Wert erhöht wird, der der um Eins verringerten Anzahl der redundanten Koppelvielfache KV in der Paketvermittlungseinrichtung PVE entspricht, während einhergehend damit die Zählerstände der Koppelvielfache KV, die das betreffende Nachrichtenpaket nicht übertragen haben, dekrementiert werden. Sind also beispielsweise vier Koppelvielfache KV in einer Paketvermittlungseinrichtung PVE vorgesehen, sowird derZählerstand des Koppelvielfachen KV, das das jeweilige weitergeleitete Nachrichtenpaket übertragen hat, um den Wert 3 erhöht, während die Zählerstände der übrigen Koppelvielfache KV jeweils um den Wert 1 erniedrigt werden. Ein Koppelvielfach KV, das einen jeweils niedrigsten Zählerstand aufweist, wird als das jeweilige langsamste Koppelvielfach KV gewertet. Es wird jeweils das über die redundanten Koppelvielfache KV übertragene Nachrichtenpaket mit der nächstfolgenden Folgenummer auf die Folgenummer des zuletzt übertragenen Nachri chtenpaketes an die in Frage kommenden Abnehmerleitung weitergeleitet, das sich bei der Überprüfung in der Auswerteeinheit AWE als fehlerfrei erweist und das als erstes seiner Nachrichtenpaket-Gruppe in der jeweiligen Auswerteeinheit AWE aufgenommen wird. Darüber hinaus wird von dem jeweils langsamsten Koppelvielfach KV jedes Nachrichtenpaket, das eine dem zuletzt übertragenen Nachrichtenpaket nachfolgende Folgenummer aufweist und das als erstes seiner zugehörigen Nachrichtenpaket-Gruppe fehlerfrei übertragen wurde, an die in Frage kommende Abnehmerleitung A weitergeleitet. Erreicht ein Zähler im Beispiel während eines Verbindungsablaufs den niedrigsten Zählerstand, der mit Null gegeben sein kann, so kann ein Ausfall des zugehörigen Koppelvielfachs KV für die jewei lige virtuelle Verbindung angenommen und Maßnahmen veranlaßt werden, die darin bestehen können, daß eine Störungsmeldung veranlaßt wird, oder auch, daß bei der Weiterleitung von nachfolgenden Nachrichtenpaketen für die betroffene virtuelle Verbindung zur Aktualisierung der zugehörigen Zählerstände von einer entsprechend reduzierten Anzahl von redundanten Koppelvielfachen ausgegangen wird.

Weiterhin kann vorgesehen sein, daß für den Fall, daß sämtliche Zähler bis auf einen den niedrigsten Zählerstand aufweisen, ein Ausfall der redundanten Übertragungswege für die jeweilige virtuelle Verbindung angenommen und veranlaßt wird, daß jedes über das dem jeweiligen einen Zähler zugehörige Koppelvielfach KV übertragene fehlerfreie Nachrichtenpaket, das eine Folgenummer aufweist, die der Folgenummer des zuletzt übertragenen Nachrichtenpaketes nachfolgt, an die in Frage kommende Abnehmerleitung Aweitergeleitet wird. Werden lediglich zwei redundante Koppelvielfache KV in der Paketvermittlungseinrichtung PVE vorgesehen, so genügt es, für jede virtuelle Verbindung einen Zähler vorzusehen, der für jedes Nachrichtenpaket, das als erstes seiner Nachrichtenpaket-Gruppe bei fehlerfreier Übertragung über das eine Koppelvielfach KV inkrementiert wird und bei fehlerfreier Übertragung über das andere Koppelvielfach dekrementiert wird. Bei einem Zählerstand der höher als der mittlere Zählerstand liegt, ist das eine das jeweils schnellste Koppelvielfach KV und das andere das jeweils langsamste Koppelvielfach KV, während bei einem Zählerstand, der niedriger als der mittlere Zählerstand liegt, das eine das jewei lige langsamste Koppelvielfach KV ist und das andere das jeweilige schnellste Koppelvielfach KV ist. Erreicht der Zählerstand dabei den höchsten oder den niedrigsten Zählerstand, so kann ein Ausfall des jeweiligen Koppelvielfachs KV für die jewei lige virtuelle Verbindung angenommen werden und veranlaßt werden, daß jedes Nachrichtenpaket, das als erstes seiner Nachrichtenpaket-Gruppe über das jeweilige verbleibende Koppelvielfach KV fehlerfrei übertragen wurde an die in Frage kommende Abnehmerleitung weitergeleitet wird.

Mit der Information V wird ein jeweils langsamstes Koppelvielfach KV gekennzeichnet. So kann beispielsweise für jedes Koppelvielfach KV ein Bit vorgesehen sein, wobei das gesetzte Bit ein jeweils langsamstes Koppelvielfach kennzeichnen kann. Sind lediglich zwei redundante Koppelvielfache KV in einer Paketvermittlungseinheit PVE vorgesehen, so genügt für die Information V ein Bit, wobei das gesetzte Bit das eine Koppelvielfach KV als das jeweils langsamste Koppelvielfach kennzeichnen kann, wohingegen das nichtgesetzte Bit das andere Koppelvielfach KV als das jeweils langsamste Koppelvielfach kennzeichnen kann. Die Information V wird durch Auswertung der verbindungsindividuellen Zählerstände Z gebildet. Nachdem die Zählerstände Z in der Steuereinrichtung MP wie weiter oben beschrieben, für ein weitergeleitetes Nachrichtenpaket verändert wurden, wird in der Steuereinrichtung MP durch Vergleich der der jeweiligen virtuellen Verbindung zugehörigen Zählerstände Z festgestellt, welcher einen jeweils niedrigsten Zählerstand aufweist und damit ein jeweiliges zugehöriges Koppelvielfach KV als jeweiliges langsamstes Koppelvielfach KV kennzeichnet und die einem solchen Koppelvielfach KV zugeordnete Information V in entsprechender Weise gesetzt. Die Information V wird zusammen mit den Zählerständen Z, der Information W und der dem gerade weitergeleiteten Nachrichten paket entsprechenden Folgenummer in den verbindungsindividuellen Speicherzellen des Speichers SP abgespeichert. Für jeden Paketkopf, der in die Auswahlschaltung AS übernommen wird, werden die der jeweiligen virtuellen Verbindung zugehörigen Daten wie die abgespeicherte Folgenummer, die Zählerstände Z, die Information W und die Information V in die Steuereinrichtung MP übernommen, wobei anhand dieser zugehörigen Daten entschieden wird, wie das jeweilige Nachrichtenpaket zu behandeln ist.

## Patentansprüche

1. Verfahren zum Weiterleiten von auf Zubringerleitungen (E1...En) im Zuge von virtuellen Verbindungen nach einem asynchronen Übertragungsverfahren übertragenen, einen die jeweilige virtuelle Verbindung bezeichnenden Paketkopf aufweisenden Nachrichtenpaketen über eine wenigstens zwei redundante Koppelvielfache (KV1, KV2) aufweisende Paketvermittlungseinrichtung (PVE) zu mitdieserverbundenen Abnehmerleitungen (A1...An) hin,
wobei für jedes der auf einer der Zubringerleitungen im Zuge einer virtuellen Verbindung übertragenen Nachrichtenpaktete durch Vermehrfachen eine Nachrichtenpaket-Gruppe mit einer der Anzahl derredundanten Koppelvielfache (KV1, KV2) entsprechenden Anzahl von identischen Nachrichtenpaketen gebildet wird,
wobei jedem der Nachrichtenpakete einer Nachrichtenpaket-Gruppe eine identische, für aufeinander folgende Nachrichtenpaket-Gruppen sich ändernde Zusatzkennung beigefügt wird, und die Nachrichtenpakete einer Nachrichtenpaket-Gruppe getrennt über die redundanten Koppelvielfache (KV1, KV2) in Richtung zu der für die jeweilige virtuelle Verbindung in Frage kommende Abnehmerleitung hin übertragen werden,
und wobei nach einer solchen Übertragung über die redundanten Koppelvielfache (KV1, KV2) anhand der den Nachrichtenpaketen jeweils beigefügten Zusatzkennung lediglich eines der zu einer Nachrichtenpaket-Gruppe gehörenden Nachrichtenpakete an die in Frage kommende Abnehmerleitung (A) weitergeleitet wird,
dadurch gekennzeichnet,
daß nach der getrennten Übertragung der Nachrichtenpakete einer Nachrichtenpaket-Gruppe über die redundanten Koppelvielfache (KV1, KV2) das als erstes eintreffende, fehlerfrei übertragene Nachrichtenpaket einer Nachrichtenpaket-Gruppe, deren Nachrichtenpakete jeweils die auf die Zusatzkennung des zuletzt übertragenen Nachrichtenpaketes nächstfolgende Zusatzkennung aufweisen, an die in Frage kommende Abnehmerleitung (A) weitergeleitet wird und/oder daß jeweils das Koppelvielfach ermittelt wird, über das die Übertragung von Nachrichtenpaketen am langsamsten erfolgt, und daß Nachrichtenpakete, die über das jeweilige langsamste Koppelvielfach jewei Is als erste ihrer Nachrichtenpaket-Gruppe fehlerfrei übertragen sind, an die in Frage kommende Abnehmerleitung (A) weitergeleitet werden.

2. Verfahren nach Anspruch 1,
dadurch gekennzeichnet,
daß das jeweilige langsamste Koppelvielfach (KV1; KV2) für eine jeweilige virtuelle Verbindung dadurch ermittelt wird, daß im Zuge des Aufbaus einer virtuellen Verbindung für jedes in der Paketvermittlungseinrichtung (PVE) vorgesehene Koppelvielfach (KV1, KV2) ein mittlerer Zählerstand eingestellt wird und daß der zugehörige Zählerstand des Koppelvielfachs (KV1; KV2), über das das gerade an die betreffende Abnehmerleitung (A) weitergeleitete Nachrichtenpaket übertragen wurde, um einen Wert erhöht wird, der der um 1 verminderten Anzahl der in der Paketvermittlungseinrichtung (PVE) vorgesehenen Anzahl von Koppelvielfachen (KV1, KV2) entspricht, und einhergehend damit der Zählerstand der Koppelvielfachen (KV1, KV2), die das gerade weitergeleitete Nachrichtenpaket nicht übertragen haben, um einen Wert 1 vermindert wird, wobei ein Koppelvielfach (KV1; KV2), dessen Zählerstand einen jeweiligen niedrigsten Zählerstand für die jeweilige virtuelle Verbindung aufweist, ein jeweiliges langsamstes Koppelvielfach (KV1; KV2) ist.

3. Verfahren nach Anspruch 2,
dadurch gekennzeichnet,
daß für den Fall, daß ein Zähler während eines Verbindungsablaufs einen Zählerstand erreicht, der ein Koppelvielfach (KV1; KV2) charakterisiert, das eine Vielzahl von weitergeleiteten Nachrichtenpaketen nicht selbst übertragen hat, eine Störungsmeldung erfolgt.

4. Verfahren nach Anspruch 2 oder 3,
dadurch gekennzeichnet,
daß für den Fall, daß sämtliche Zähler bis auf einen den höchsten bzw. den niedrigsten Zählerstand, der jeweils ein Koppelvielfach (KV1; KV2) charakterisiert, über das für einen längeren Zeitraum kein Nachrichtenpaket an die Abnehmerleitung (A) weitergeleitet wurde aufweisen, über das dem jeweiligen einen Zähler zugehörige Koppelvielfach (KV1; KV2) jedes fehlerfrei übertragene Nachrichtenpaket, das auf das zuletzt weitergeleitete Nachrichtenpaket nachfolgt, weitergeleitet wird.

5. Schaltungsanordnung zum Weiterleiten von aufZubringerleitungen im Zuge von virtuellen Verbindungen nach einem asynchronen Übertragungsverfahren übertragenen, einen die jeweilige virtuelle Verbindung bezeichnenden Paketkopf aufweisenden Nachrichtenpaketen über eine wenigstens zwei redundante Koppelvielfache (KV1, KV2) aufweisende Paketvermittlungseinrichtung (PVE) zu mitdieserverbundenen Abnehmerleitungen (A) hin, wobei jeder der Zubringerleitungen eine Behandlungseinrichtung (BWE) zugeordnet ist, welche einerseits den über die jeweilige Zubringerieitung übertragenen Nachrichtenpaketen jeweils eine für aufeinanderfolgende Nachrichtenpakete sich ändernde Zusatzkennung beifügt und andererseits aus den um die Zusatzkennung ergänzten Nachrichtenpaketen jeweils eine Nachrichtenpaket-Gruppe mit einer der Anzahl der redundanten Koppelvielfache (KV1, KV2) entsprechenden Anzahl von identischen Nachrichtenpaketen bildet, die den redundanten Koppelvielfachen (KV1, KV2) zugeführtsind, und wobei jeder der Abnehmerieitungen (A) eine Auswerteeinrichtung (AWE) zugeordnet ist, welche über die redundanten Koppelvielfache (KV1, KV2) übertragene Nachrichtenpakete aufnimmt und anhand der den Nachrichtenpaketen jeweils beigefügten Zusatzkennung und gegebenenfalls der von der Behandlungseinrichtung (BHE) her gerade bei der Bildung einer Nachrichtenpaket-Gruppe für die jeweilige virtuelle Verbindung benutzten, zur Verfügung stehenden Zusatzkennung lediglich eines der zu einer Nachrichtenpaket-Gruppe gehörenden Nachrichtenpakete an die zugeordnete Ausgangsleitung (A) abgibt,
dadurch gekennzeichnet,
daß die jeweilige Auswerteeinrichtung (AWE) jeweils das Nachrichtenpaket einer Nachrichtenpaket-Gruppe an die zugeordnete Ausgangsleitung (A) weiterleitet, das als erstes mit der Zusatzkennung, die der Zusatzkennung des zuletztübertragenen Nachrichtenpaketes aufeinanderfolgt, eintrifft
und daß die Auswerteeinrichtung (AWE) jeweils das Koppelvielfach (KV1; KV2) ermittelt, über das die Übertragung von Nachrichtenpaketen am langsamsten erfolgt
und daß die Auswerteeinrichtung (AWE) Nachrichtenpakete, die jeweils als erste ihrer Nachrichtenpaket-Gruppe über das jeweilige langsamste Koppelvielfach (KV1; KV2) fehlerfrei übertragen sind, weiterleitet.

6. Schaltungsanordnung nach Anspruch 5,
dadurch gekennzeichnet,
daß in der Auswerteeinrichtung (AWE) jeweils ein Speicher (SP) mit einer Mehrzahl von Speicherzellen vorgesehen ist, in welchen für die einzelnen virtuellen Verbindungen individuell die für die Auswertung einer Nachrichtenpaket-Gruppe gerade aktuelle Zusatzkennung gespeichert ist, und daß die Speicherzellen jeweils durch die jeweilige virtuelle Verbindung bezeichnende, in dem Paketkopf der Nachrichtenpakete jeweils enthaltene Angaben für eine Bereitstellung der gespeicherten Zusatzkennung ansteuerbar sind, und daß auf jede Ansteuerung einer Speicherzelle hin die darin gespeicherte Zusatzkennung aktualisiert ist.

7. Schaltungsanordnung nach Anspruch 6,
dadurch gekennzeichnet,
daß in den Speicherzellen neben der jeweils aktuellen Zusatzkennung jeweils eine Information abgespeichert ist, aus der für die jeweilige virtuelle Verbindung ein jeweiliges langsamstes Koppelvielfach (KV) entnehmbar ist.

## Claims

1. Method for forwarding information packets, which exhibit a packet header designating the respective virtual connection and which are transmitted in accordance with an asynchronous transfer method on offering trunks (E1...En) in the course of virtual connections, via a packet switch (PVE), which exhibits at least two redundant switching matrices (KV1, KV2), towards serving trunks (A1...An) connected to this packet switch, in which method an information packet group having a number of identical information packets corresponding to the number of redundant switching matrices (KV1, KV2) is formed by multiplication for each of the information packets transmitted on one of the offering trunks in the course of a virtual connection, an identical additional identification, which changes for successive information packet groups, being attached to each of the information packets of an information packet group, and the information packets of an information packet group being transmitted separately via the redundant switching matrices (KV1, KV2) in the direction of the serving trunk considered for the respective virtual connection, and in which method, after such a transmission via the redundant switching matrices (KV1, KV2), only one of the information packets belonging to an information packet group is forwarded to the serving trunk (A) considered, by means of the additional identification in each case attached to the information packets, characterized in that, after the separate transmission of the information packets of an information packet group via the redundant switching matrices (KV1, KV2), the information packet which is the first one to arrive and is transmitted without errors, of an information packet group, the information packets of which in each case exhibit the next additional identification following the additional identification of the information packet transmitted last, is forwarded to the serving trunk (A) considered and/or in that in each case the switching matrix is determined via which information packets are transmitted very slowly, and that information packets which are in each case the first ones to be transmitted without errors in their information packet group via the respective slowest switching matrix are forwarded to the serving trunk (A) considered.

2. Method according to Claim 1, characterized in that the in each case slowest switching matrix (KV1; KV2) for a respective virtual connection is determined by the fact that during the setting-up of a virtual connection for each switching matrix (KV1, KV2) provided in the packet switch (PVE), a mean count is set and that the associated count of the switching matrix (KV1; KV2) via which the information packet currently forwarded to the relevant serving trunk (A) has been transmitted is incremented by a value which corresponds to the number, decremented by one, of the number of switching matrices (KV1, KV2) provided in the packet switch (PVE), and concurrently therewith, the count of the switching matrices (KV1, KV2) which have not transmitted the currently forwarded information packet is decremented by a value 1, a switching matrix (KV1; KV2), the count of which exhibits an in each case lowest count for the respective virtual connection, being a respective slowest switching matrix (KV1; KV2).

3. Method according to Claim 2, characterized in that in the case where a counter reaches a count which characterizes a switching matrix (KV1; KV2) which has not itself transmitted a multiplicity of forwarded information packets during a connection procedure, a fault message is produced.

4. Method according to Claim 2 or 3, characterized in that in the case where all counters apart from 1 exhibit the highest or respectively the lowest count which in each case characterizes a switching matrix (KV1; KV2), via which no information packet has been forwarded to the serving trunk (A) for a relatively long period, each information packet which has been transmitted without errors and which follows the information packet last forwarded is forwarded via the switching matrix (KV1; KV2) belonging to the respective one counter.

5. Circuit arrangement for forwarding information packets, which exhibit a packet header designating the respective virtual connection and which are transmitted in accordance with an asynchronous transfer method on offering trunks in the course of virtual connections, via a packet switch (PVE) exhibiting at least two redundant switching matrices (KV1, KV2) towards serving trunks (A) connected to this packet switch, each of the serving trunks being associated with a handling facility (BWE) which, on the one hand, in each case attaches an additional identification, which changes for successive information packets, to the information packets transmitted via the respective offering trunk and, on the other hand, forms from the information packets supplemented by the additional identification in each case an information packet group having a number of identical information packets corresponding to the number of redundant switching matrices (KV1, KV2), which are supplied to the redundant switching matrices (KV1, KV2), and in which method each of the serving trunks (A) is associated with an evaluating device (AWE) which receives information packets transmitted via the redundant switching matrices (KV1, KV2) and outputs only one of the information packets belonging to an information packet group to the associated output trunk (A) by means of the additional identification in each case attached to the information packets and, if necessary, the available additional identification currently used by the handling facility (BHE) during the formation of information packet group for the respective virtual connection, characterized in that the respective evaluating device (AWE) in each case forwards the information packet of an information packet group to the associated output trunk (A) which is the first one to arrive with the additional identification which follows the additional identification of the last information packet transmitted, and in that the evaluating device (AWE) in each case determines the switching matrices (KV1; KV2) via which information packets are transmitted most slowly, and in that the evaluating device (AWE) forwards information packets which are in each case the first ones to be transmitted without errors in their information packet group via the respective slowest switching matrix (KV1; KV2).

6. Circuit arrangement according to Claim 5, characterized in that in the evaluating device (AWE), in each case a memory (SP) having a plurality of memory cells is provided in which the current additional identification for the evaluation of an information packet group is individually stored for the individual virtual connections, and in that the memory cells can be in each case activated by information, designating the respective virtual connection and in each case contained in the packet header of the information packets, for providing the stored additional identification, and in that, following each activation of a memory cell, the additional identification stored therein is updated.

7. Circuit arrangement according to Claim 6, characterized in that, in addition to the in each case current additional identification, in each case an information item is stored in the memory cells from which a respective slowest switching matrix (KV) can be determined for the respective virtual connection.

## Revendications

1. Procédé pour retransmettre des paquets d'informations, qui sont transmis dans des lignes d'arrivée (E1...En) au cours de liaisons virtuelles selon un procédé de transmission asynchrone et possèdent une tête de paquet qui désigne la liaison virtuelle respective, par l'intermédiaire d'un dispositif de commutation de paquets (PVE), qui possède au moins deux multiples de couplage redondants (KV1, KV2), à des lignes de départ (A1...An) reliées à ce dispositif,
selon lequel, pour chacun des paquets d'informations transmis dans l'une des lignes d'arrivée au cours d'une liaison virtuelle, un groupe de paquets d'informations comportant un nombre de paquets identiques d'informations, qui correspond au nombre des multiples de couplage (KV1,KV2) redondants, est formé par multiplication,
selon lequel à chacun des paquets d'informations d'un groupe de paquets d'informations est adjointe une caractérisation identique supplémentaire, qui varie pour des groupes successifs de paquets d'informations, et les paquets d'informations d'un groupe de paquets d'informations sont transmis séparément par l'intermédiaire des multiples de couplage (KV1,KV2) redondants en direction de la ligne de départ qui entre en jeu pour la liaison virtuelle respective, et
selon lequel après une telle transmission par l'intermédiaire des multiples de couplage (KV1, KV2) redondants, sur la base de la caractérisation supplémentaire adjointe respectivement aux paquets d'informations, seul l'un des paquets d'informations, qui est associé à un groupe de paquets d'informations, est retransmis à la ligne de départ (A) en question,
caractérisé par le fait
qu'après la transmission séparée des paquets d'informations d'un groupe de paquets d'informations par l'intermédiaire des multiples de couplage (KV1, KV2) redondants, le paquet d'informations, qui arrive le premier et qui est transmis sans erreur, d'un groupe de paquets d'informations, dont les paquets d'informations possèdent respectivement la caractérisation supplémentaire qui succède immédiatement à la caractérisation supplémentaire du paquet d'informations transmis en dernier lieu, est retransmis à la ligne de départ (A) en question et/ou que respectivement le multiple de couplage, au moyen duquel la transmission d'informations s'effectue depuis le plus lentement, est déterminé et que des paquets d'informations, qui sont transmis sans erreur par l'intermédiaire de multiples de couplage respectivement le plus lent, respectivement en tant que premier de leurs groupes de paquets d'informations, sont retransmis à la ligne de départ (A) entrant en jeu.

2. Procédé suivant la revendication 1, caractérisé par le fait que le multiple de couplage respectif (KV1; KV2) le plus lent est déterminé pour une liaison virtuelle respective par le fait qu'au cours de l'établissement d'une liaison virtuelle pour chacun des multiples de couplage (KV1; KV2) prévus dans le dispositif de commutation de paquets (PVE), un état de comptage moyen est réglé et que l'état de comptage associé du multiple de couplage (KV1; KV2), au moyen duquel a été transmis le paquet d'informations précisément envoyé à la ligne d'abonné considérée (A), est accru d'une valeur qui correspond au nombre, diminué de 1, de multiples de couplage (KV1, KV2), prévus dans le dispositif de commutation de paquets (PVE), et que, par conséquent, l'état de comptage des multiples de couplage (KV1, KV2), qui n'ont pas transmis le paquet d'informations précisément retransmis, est diminué d'une valeur 1, le multiple de couplage (KV1; KV2), dont l'état de comptage possède la plus faible valeur respective pour la liaison virtuelle respective, étant un multiple de couplage respectif (KV1; KV2) extrêmement lent.

3. Procédé suivant la revendication 2, caractérisé par le fait qu'une signalisation de perturbation se produit dans le cas où un compteur atteint, pendant le déroulement d'une liaison, un état de comptage qui caractérise un multiple de couplage (KV1; KV2), qui n'a pas transmis lui-même une multiplicité de paquets d'informations retransmises.

4. Procédé suivant la revendication 2 ou 3, caractérisé par le fait que dans le cas où tous les compteurs possèdent un état de comptage allant jusqu'à l'état de comptage le plus élevé ou le plus bas, qui caractérise respectivement un multiple de couplage (KV1; KV2) au moyen duquel aucun paquet d'informations n'a été retransmis pendant un intervalle de temps assez long à la ligne de départ (A), chaque paquet d'informations transmis sans erreur, qui succède au paquet d'informations retransmis en dernier lieu, est retransmis par l'intermédiaire du multiple de couplage (KV1; KV2), qui est associé au compteur respectif.

5. Montage pour la retransmission de paquets d'informations, qui sont transmis dans des lignes d'arrivée au cours de liaisons virtuelles selon un procédé de transmission asynchrone et possèdent une tête de paquet désignant la liaison virtuelle respective, par l'intermédiaire d'un dispositif de commutation de paquets (PVE) comportant au moins deux multiples de couplage redondant (KV1, KV2), à des lignes de départ (A) reliées à ce dispositif, et dans lequel à chacune des lignes d'arrivée est associé un dispositif de traitement (BWE), qui, d'une part, adjoint respectivement une caractérisation supplémentaire qui varie pour des paquets d'informations successifs, aux paquets d'informations transmis par l'intermédiaire de la ligne d'arrivée respective, et, d'autre part, forme, à partir des paquets d'informations complètant la caractérisation supplémentaire, respectivement un groupe de paquets d'informations possédant un nombre, qui correspond au nombre des multiples de couplage (KV1, KV2) redondants, de paquets d'informations identiques qui sont envoyés aux multiples de couplage redondants (KV1, KV2), et dans lequel à chacune des lignes de départ (A) est associé un dispositif d'évaluation (AWE), qui reçoit des paquets d'informations transmis par l'intermédiaire des multiples de couplage redondants (KV1, KV2) et délivre, sur la base de la caractérisation supplémentaire respectivement adjointe aux paquets d'informations et éventuellement de la caractérisation supplémentaire disponible, qui est utilisée par le dispositif de traitement (BHE) précisément lors de la formation d'un groupe de paquets d'informations pour la liaison virtuelle respective, uniquement l'un des paquets d'informations, qui font partie d'un groupe de paquets d'informations, à la ligne de sortie associée (A),
caractérisé par le fait
que le dispositif d'évaluation respective (AWE) retransmet à la ligne de sortie associée (A) respectivement le paquet d'informations d'un groupe de paquets d'informations qui apparaît en premier avec la caractérisation supplémentaire qui succède à la caractérisation supplémentaire du paquet d'informations transmis en dernier lieu, et
que le dispositif d'évaluation (AWE) détermine respectivement le multiple de couplage (KV1; KV2), et au moyen duquel la transmission de paquets d'informations s'effectue plus lentement, et
que le dispositif d'évaluation (AWE) retransmet des paquets d'informations qui sont transmis sans erreur, respectivement en tant que premier de leurs groupes de paquets d'informations, par l'intermédiaire du multiple de couplage (KV1; KV2) respectivement le plus lent.

6. Montage suivant la revendication 5, caractérisé par le fait que dans le dispositif d'évaluation (AWE) est prévue respectivement une mémoire (SP) possédant une multiplicité de cellules de mémoire dans lesquelles est mémorisée individuellement, pour les différentes liaisons virtuelles, la caractérisation supplémentaire précisément actuelle pour l'évaluation d'un groupe de paquets d'informations, et que les cellules de mémoire peuvent être commandées respectivement par des indications, qui désignent la liaison virtuelle respective et sont contenues respectivement dans la tête des paquets d'informations, pour une préparation de la caractérisation supplémentaire mémorisée, et que lors de chaque commande d'une cellule de mémoire, la caractérisation supplémentaire mémorisée dans cette cellule est actualisée.

7. Montage suivant la revendication 6, caractérisé par le fait que dans les cellules de mémoire est mémorisée, respectivement, en plus de la caractérisation supplémentaire actuelle respective, une information, à partir de laquelle on peut déterminer un multiple de couplage respectif (KV) travaillant le plus lentement, pour la liaison virtuelle respective.
